# EUROPEAN PATENT APPLICATION

(11) **EP 0 746 043 A2**
(43) Date of publication of application: **04.12.1996**
(21) Application number: 96108581.8
(22) Date of filing: 30.05.1996
(51) Int. Cl.: H01L 31/042

(54) **Plate-like body structure with solar battery for sound insulation wall**

(30) Priority: 30.05.1995 JP 154058/95
(71) Applicant: NITTO BOSEKI CO., LTD., Fukushima-shi Fukushima (JP)
(72) Inventor: Yamamura, Shinta, Yokohama-shi, Kanagawa (JP); Furuta, Naoyuki, Suginami-ku, Tokyo (JP); Mizukami, Tadanori, Fuchu-shi, Tokyo (JP); Tazaki, Yutaka, Ninomiya-cho, Naka-gun, Kanagawa (JP); Mikami, Takashi, Tokorozawa-shi, Saitama (JP)
(74) Representative: Füchsle, Klaus, Dipl.-Ing.

(57) **Abstract**

A solar-battery-built-in plate-like body structure for a sound insulation wall constituted by the combination of a solar-battery-built-in structure for a sound insulation wall having a gentle convex arcuate shape so as to be installed on the top end portion of a sound insulation wall in the form of a head board, and a solar-battery-built-in structure for a sound insulation wall having a solar-battery-built-in plate-like body held by transparent plate-like materials from its opposite sides and inserted into a window-like opening portion or a wall holding frame portion formed in the sound insulation wall.

## Description

### BACKGROUND OF THE INVENTION

The present invention relates to a plate-like body structure for installing a solar battery on a sound insulation wall erected in a road edge portion, which is intended to supply electric power to equipments on a superhighway or the like, and the area around the road.

Conventional solar batteries have been mainly composed of a crystal silicon group. Various installing methods and structures have been examined in view of a basic function that the light receiving surface of a solar battery which is made planar from its characteristic is faced to the direction of irradiation light so as to convert the irradiation light into electric energy. Similarly to above, also upon solar batteries for apparatus used in a superhighway or the like, there have been examined a method where solar batteries are integrally bonded to the wall surface erected on the edge portion of a road, a method where solar batteries are installed obliquely on an oblique overhang provided on the wall surface, a method where a support is erected and a plate to install solar batteries thereon is disposed obliquely on the upper portion of the support, and so on.

However, each of these methods has problems such that the conversion efficiency is poor, that installation takes an extra time and labor because of necessary of installation in another place or necessary of post-installation, that a new installation place and installation cost are required, that management after installation needs much labor, etc. Therefore, none of these methods have been used in practice.

A solar battery is a clean energy supplying source, and can be installed in any place, no matter small or large, so long as the installation place is capable of receiving light. In addition, in the case of employing a method in which a secondary battery is charged and the charged energy is used, a solar battery becomes a stable electric energy supplying source. On the other hand, the solar battery has problems such that the manufacturing and equipment cost is high for the generated energy in comparison with other electric energy supplying sources, and that a large installation area is required to set up a light receiving equipment, etc.

In the case where a solar battery generator set is installed for supplying electricity to equipments on superhighway or the like, in view of the foregoing problems, it is required that the manufacturing cost of a solar battery itself is made low, and that the light receiving equipment can be manufactured at a low price, can be installed easily without necessary of any special provision, for example, by incorporating it into an equipment which has been laid, etc., and can be used efficiently.

### SUMMARY OF THE INVENTION

According to the present invention, a three-layer-cell-structure amorphous silicon solar battery (made by Canon Inc.) was selected to employ as one of means to solve the foregoing problems. As for the materials of silicon solar batteries, there are three kinds, single crystal silicon, polycrystal silicon and amorphous silicon. An amorphous silicon solar battery is advantageous in that it has flexibility in comparison with a crystalline silicon solar battery which has been mainly used, it is easy in shaping and light in weight, it is strong against damage such as crack, and so on. The three-layer-cell-structure amorphous silicon solar battery is further advantageous in that resource and energy required in its manufacturing process can be reduced so that the manufacturing cost is reduced to about 1/3 compared with a crystalline silicon system one. Low conversion efficiency and photo-deterioration phenomenon which have been defects in an amorphous silicon solar battery are also improved greatly by the three-layer-cell-structure, and the three-layer-cell-structure amorphous silicon solar battery becomes an available constituent in practice.

According to the present invention, such a three-layer-cell-structure amorphous silicon solar battery is used as a solar battery for supplying electric power to equipments on a superhighway or the like and the area around the road. The solar battery is installed integrally with a sound insulation wall erected on the edge portion of the road so as to form a plate-like structure with a solar battery for the sound insulation wall. As one of means for forming such a plate-like structure with a solar battery for a sound insulation wall, a plate-like body is formed by bonding and shaping a flexible amorphous silicon solar battery to a plate-like material having a gentle convex arcuate portion so as to be installed on the top end portion of the sound insulation wall in the form of a head board, and electric connection portions are internally provided at the appropriately arcuate inside circumferential edge portions of the plate-like body so as not to project over the circumferential edge. Such plate-like structures with solar batteries for sound insulation walls are coupled by wiring with each other through their electric connection portions so as to have the function of generating electricity of the quantity corresponding to the number of the coupled plate-like structures. In addition, wiring from the electric connection portions provides the function of incorporating circuits and apparatus such as a booster circuit or a secondary battery into the inner space surrounded by the approximately arcuate plate-like body.

As other means for forming such a plate-like structure with a solar battery for a sound insulation wall, the wall surface of the sound insulation wall itself is also used as a solar battery structure effectively. That is, two amorphous silicon solar batteries are bonded and integrally shaped so that the not-light-receiving sides thereof are made to face each other while the light receiving sides are made outside, and further a pair of transparent plate-like materials are formed to hold the integrally shaped amorphous silicon solar batteries at the front and rear thereof. A plate-like body obtained thus is used so as to receive light from both the front and the rear thereof. There are two ways to use the plate-like body, that is, in one way, the plate-like body is inserted into a wall holding frame portion formed from a die steel material so as to have also a sound insulation wall function, and in the other way, a window-like opening portion is provided in the sound insulation wall, and the plate-like body is inserted into a frame groove provided in the circumferential edge of the window-like opening portion so as to have also a sound insulation wall function. In each of the two means, such plate-like bodies are coupled by wiring with each other through their electric connection portions and through through-holes provided in wall holding frame portions of the sound insulation walls coupled with each other or through through-holes provided in the sound insulation walls so as to have a function to adjust the quantity of generated energy in accordance with the conditions of the installed place and the number of the coupled plate-like bodies in accordance with the required quantity of electric energy.

Further, when the plate-like structure with a solar battery for a sound insulation wall in which solar battery equipments and circuits are built in and which is to be installed on the top end portion of the sound insulation wall in the form of a head board, is integrally installed from above and coupled with the above-mentioned plate-like structure with a solar battery for a sound insulation wall formed by inserting a plate-like body with a solar battery into a window-like opening portion provided in the sound insulation wall or a wall holding frame portion of the sound insulation wall, the entire of the sound insulation wall functions as a solar battery structure system.

Use of a flexible amorphous silicon solar battery enables the solar battery to be shaped and bonded to a gentle convex arcuate plate-like body which is to be installed on the top end of a sound insulation wall in the form of a head board, so that the solar battery is used also as a sound insulation wall, the installation can be made easily, and the function as a solar battery can be exhibited effectively.

In a plate-like structure with a solar battery for a sound insulation wall, which has a gentle convex arcuate portion and is installed on the top end portion of the sound insulation wall in the form of a head board, electric connection portions are internally provided in circumferential edge portions so as not to project over the circumferential edges, so that when the plate-like structure is installed in a site, the working of electric connection and coupling of many plate-like structures are easily made, and the structure is also effective in carrying it into a site and in prevention from damage.

A plate-like body with a solar battery used in the state of insertion into a window-like opening portion formed in a sound insulation wall or a wall holding frame portion, is formed such that the light receiving sides thereof are made to face outside and to extend over both the front and rear sides of the sound insulation wall. Thus, the efficiency of light reception is superior. Both the sides of the solar battery are held by transparent plate-like materials which are good in transparency and superior in weatherability and strength, so that the function as a sound insulation wall can be also exhibited sufficiently. In addition, the plate-like body with a solar battery is used in the state of insertion, so that the installation is easy. Further, electric connection portions are internally provided on circumferential edge portions so as not to project over the circumferential edges, so that the working of electric connection becomes easy when coupling and installation of plate-like bodies are carried out in a site.

When the plate-like structure with a solar battery for a sound insulation wall in which equipments and circuits are built on the inner wall of the substrate and which is to be installed on the top end portion of the sound insulation wall in the form of a head board, is integrally installed from above and coupled with the above-mentioned plate-like structure with a solar battery for a sound insulation wall formed by inserting a plate-like body with a solar battery into the sound insulation wall, the entire of the sound insulation wall can also be used as a solar battery structure system superior in efficiency.

### BRIEF DESCRIPTION OF THE DRAWINGS

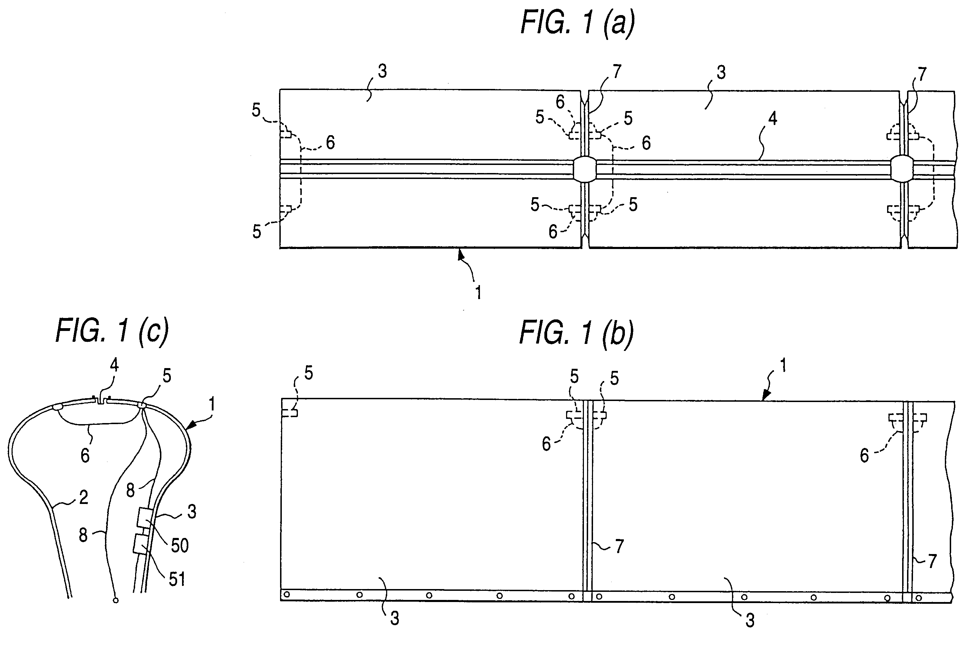

Figs. 1(a), 1(b) to 1(c) are a front view, a plan view and a side view of a first embodiment of a plate-like structure with a solar battery for a sound insulation wall according to the present invention, where the structure is installed on the top end portion of the sound insulation wall in the form of a head board;

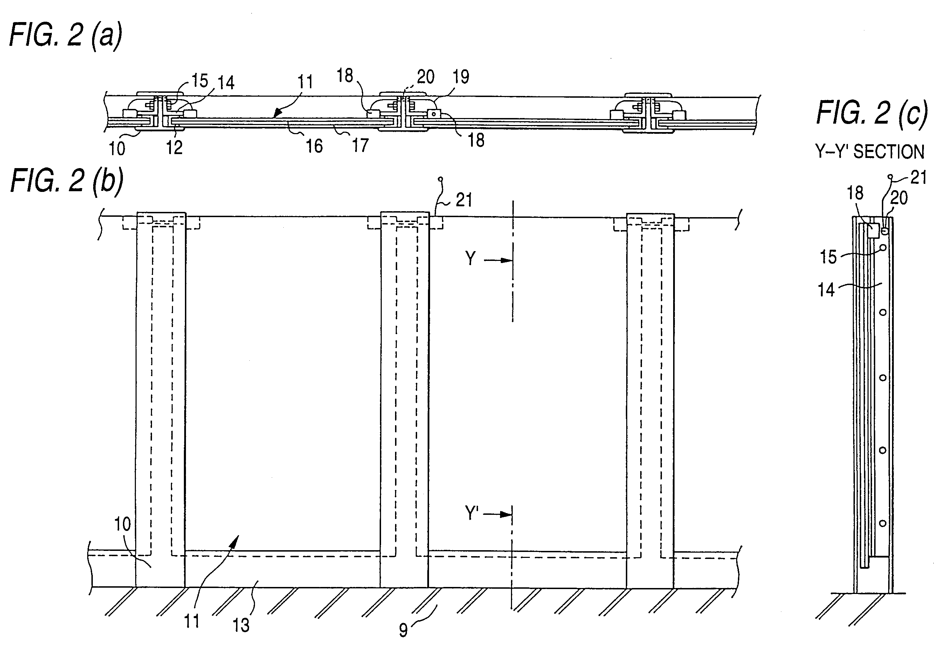

Figs. 2(a), 2(b) and 2(c) are a front view, a plan view and a sectional view of a second embodiment of the present invention, where a plate-like structure with a solar battery for a sound insulation wall is used in insertion into a wall holding frame portion erected on the edge of a road;

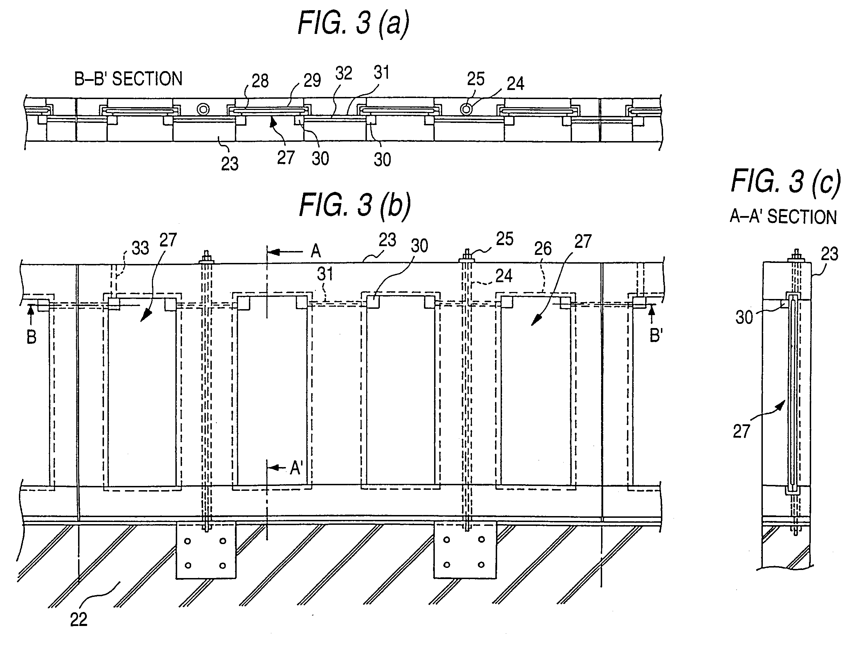

Figs. 3(a), 3(b) and 3(c) are a front view, a plan view and a sectional view of a third embodiment of the present invention, where a plate-like structure with a solar battery for a sound insulation wall is used in insertion into a window-like opening portion formed in the sound insulation wall mounted on the upper surface of a base erected on the edge of a road; and

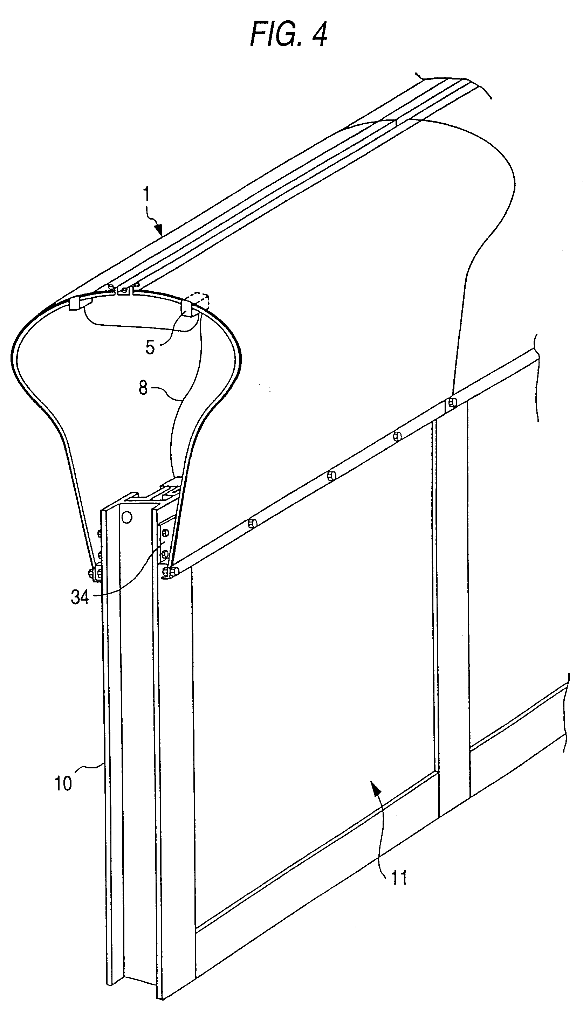

Fig. 4 is a perspective view of a fourth embodiment of the present invention, where a plate-like structure with a solar battery for a sound insulation wall has such a structure as is obtained by combining the embodiments of Figs. 1 and 2.

### DETAILED DESCRIPTION OF THE PREFERRED EMBODIMENTS

Preferred embodiments of the present invention will be described below with reference to the drawings.

Figs. 1(a), 1(b) and 1(c) are a front view, a plan view and a side view of a plate-like structure with a solar battery for a sound insulation wall, in which the structure is installed on the top end portion of the sound insulation wall in the form of a head board.

In Figs. 1(a)-1(c), a solar-battery-built-in plate-like body 1 is formed in such a manner that a substrate 2 formed from a hard plate-like material such as a steel plate or the like having a gentle convex arcuate portion, and a flexible amorphous silicon solar battery 3 are bonded and shaped with each other so that the solar battery 3 is made to cover the outer surface of the substrate 2. In this embodiment, in order to install the plate-like body 1 onto a top end portion of a sound insulation wall easily, and in order to carry the plate-like body 1 into a site without being unwieldy, the top end portion of the plate-like body 1 is halved at its center, and the two divisions of the plate-like body 1 are connected to each other at their top end connection portions 4. However, the plate-like body 1 may be shaped into an integrated form without providing any top end connection portions 4. Although the halved portions of the plate-like body 1 are connected with each other symmetrically with respective to the top end connection portions 4, the shape is not limited to this, and there are no problems so long as the plate-like body 1 has a gentle convex arcuate portion having, for example, a semi-circular section, a semi-elliptic section, or the like, so that a flexible amorphous silicon solar battery can adhere thereto. Although the amorphous silicon solar battery 3 is made to adhere onto the whole surface of the substrate 2 basically, it may be made to adhere not onto the whole surface but partially on demands, with not-adhering portions left as they are, or in some case, the solar battery 3 may be covered with a transparent plate-like material such as an acrylic sheet or the like. Further, the solar-battery-built-in plate-like body 1 can be coupled with another one through coupling connection portions 7, and may be coupled with further ones in accordance with the conditions of the installing place and the required quantity of electric energy.

Electric connection portions 5 are connected to the amorphous silicon solar battery 3 at the circumferential edge portions of the solar-battery-built-in plate-like body 1 through fitting holes provided in the substrate 2 so that the electric connection portions 5 do not project over the circumferential edges of the plate-like body 1. In addition, such electric connection portions 5 are provided by two, one in the right and the other one in the left, at the side of the coupling connection portions 7 on the circumferential edge portion of the solar-battery-built-in plate-like body 1. The divisions of the solar-battery-built-in plate-like body 1 opposite to each other in the right and left with respect to the top end connection portion 4 are connected to each other by respective wiring 6 through the electric connection portions 5, and the solar-battery-built-in plate-like bodies 1 coupled are connected to each other at the coupling connection portions 7 by respective wiring 6 through their electric connection portions 5 so that electricity generated in the respective solar batteries can be transmitted. The electric connection portions 5 may be integrated with the wiring 6 so that the integrated connection portions with the wiring can be removably attached to the solar-battery-built-in plate-like bodies 1. In addition, as shown in Fig. 1(c), devices and/or circuits such as a booster circuit 50 or a secondary battery 51 can be provided through a wiring 8 extending from the electric connection portion 5 in accordance with necessity. As the method of installation, it is not necessary to put such additional devices and/or circuits into a protection box so as to be protected from wind and rain, or it is not necessary to provide any other special place for installation, but they can be installed on the substrate 2 as they are, by use of the inner space surrounded by the solar-battery-built-in plate-like body 1.

Figs. 2(a)-2(c) show a second embodiment in which a solar-battery-built-in plate-like body 11 is inserted into a wall holding frame portion 10 made from a die steel material and erected at the edge of a road 9 such as a superhighway or the like so as to have also a function as sound insulation wall. As for the method of installation, the right and left edge portions of the solar-battery-built-in plate-like body 1 are sandwiched along their entire length between packing 12 for holding, damping, and absorbing thermal expansion, inserted into the wall holding frame body 10 from the above so as to be received by a lower frame portion 13, further held by a holding bracket 14, and then fixed by means of a set of bolt and nut 15.

The thus inserted solar-battery-built-in plate-like body 11 has been worked in advance in such a shape that an amorphous silicon solar battery 16 is held by a pair of transparent plate-like materials 17 from its front and back surfaces before the plate-like body 11 is inserted, and two electric connection portions 18 are provided, that is, one on the right side of the upper portion and the other on the left side of the upper portion. Although the amorphous silicon solar battery 16 is used basically in such a manner that two such amorphous silicon solar batteries 16 are used in combination with their light receiving sides faced outside, only one amorphous silicon solar battery 16 may be used with its light receiving side faced only one direction toward a target in accordance with necessity. As the transparent plate-like materials 17, any plate-like material may be used so long as it has enough strength and transparency as a wall body. In this embodiment, however, methacrylic resin plates in acrylic materials, which are superior particularly in transparency, optical characteristics, weatherability and surface hardness, are adopted.

The inserted solar-battery-built-in plate-like body 11 is electrically coupled with other adjacent solar-battery-built-in plate-like bodies 11 through wrings 19 extending from its electric connection portions 18 to the electric connection portions 18 of the latter, through through-holes 20 provided in the wall holding frame portions 10. Each electric connection portion 18 may be integrated with its wiring 19 so that the electric connection portion 18 with its wiring 19 may be removably attached to the solar-battery-built-in plate-like body 11. By suitably successively coupling solar-battery-built-in plate-like bodies 11 with each other through wiring 19, the quantity of generated electric energy may be adjusted in accordance with the conditions of the installation place and required quantity of electric energy. In addition, other solar batteries and/or apparatus and circuits such as a booster and a secondary battery may be incorporated on the extensions of wiring 21 connected to and led out from the electric connection portions 18, in accordance with necessity.

In Figs. 3(a)-3(c), a square concrete sound insulation wall 23 is mounted on the upper portion of a concrete balustrade 22 as a base erected at the edge of a superhighway or the like. The balustrade 22 and the concrete sound insulation wall 23 are fixed with each other by a bar 25 inserted into a through hole 24 provided vertically. Further, a window-like opening portion which is rectangular and long in the vertical direction is provided in the vertical surface of the concrete sound insulation wall 23, and a frame groove 26 is provided in the circumferential edge of the window-like opening portion.

The solar-battery-built-in plate-like body 27 has been worked in advance in such a shape that an amorphous silicon solar battery 28 is held by a pair of transparent plate-like materials 29 from its front and back surfaces and electric connection portions 30 are provided by two, that is, one on the right side of the upper portion and the other on the left side of the upper portion. Although the amorphous silicon solar battery 16 is used basically in such a manner that two such amorphous silicon solar batteries 16 are used in combination with their light receiving sides faced outside, only one amorphous silicon solar battery 16 may be used with its light receiving side faced only one direction toward a target in accordance with necessity. As the transparent plate-like materials 29, any plate-like material may be used so long as it has enough strength and transparency as a wall body. In this embodiment, however, methacrylic resin plates in acrylic materials, which are superior particularly in transparency, optical characteristics, weatherability and surface hardness, are adopted.

The solar-battery-built-in plate-like body 27 is inserted into the frame groove 26 provided in the circumferential edge of a window-like opening portion of the concrete sound insulation wall 23. The solar-battery-built-in plate-like body 27 is electrically coupled with other adjacent solar-battery-built-in plate-like bodies 27 through wiring 32 which are connected between an electric connection portion 30 of the former and the respective electric connection portions 30 of the latter, through through-holes 31 provided horizontally in the concrete sound insulation wall 23. Each electric connection portion 30 may be integrated with its wiring 32 so that the electric connection portion 30 with its wiring 32 may be removably attached to the solar-battery-built-in plate-like body 27. By suitably successively coupling solar-battery-built-in plate-like bodies 27 with each other through wiring 32, the quantity of generated electric energy may be adjusted in accordance with the conditions of the installation place and required quantity of electric energy. In addition, through holes 33 are provided in suitable places in the upper and lower portions of the vertical surface from the upper edge of the concrete sound insulation wall 23, so that another solar battery and/or apparatus and circuits such as a booster and a secondary battery may be incorporated on the extension of a wiring connected to the electric connection portion 30. In addition, a seal material, a packing and so on may be inserted into a gap between the inserted solar-battery-built-in plate-like body 27 and the frame groove 26 to thereby prevent rainwater from entering the gap, or to thereby hold the solar-battery-built-in plate-like body 27.

Fig. 4 shows a fourth embodiment of a structure in which the respective embodiments in Figs. 1 and 2 are combined. In this embodiment, there are provided both the sound insulation wall structure in which the solar-battery-built-in plate-like body 11 is inserted into the wall holding frame portion 10 erected at the edge portion of the road 9 such as a superhighway or the like and made from a die steel material so as to provide also a function of a sound insulation wall as shown in Fig. 2, and the structure in which the solar-battery-built-in plate-like body 1 having a gentle convex arcuate portion and halved at the center of the top end portion is installed on the upper portion. The two structures are fixed with each other by bolts through a connecting bracket 34 in the lower end portion of the solar-battery-built-in plate-like body 1 and in the upper end portion of the wall holding frame portion 10. The wiring 8 led from the electric connection portion 5 of the solar-battery-built-in plate-like body 1 is connected to the electric connection portion 18 of the solar-battery-built-in plate-like body 11 so that the solar-battery-built-in plate-like bodies 1 and 11 are electrically coupled with each other.

In the same manner as the embodiment in Fig. 4, the lower end portion of the solar-battery-built-in plate-like body 1 in Fig. 1 installed on the upper portion may be fixed by means of screws to the upper end portion of the concrete sound insulation wall 23 shown in Fig. 3 through a connection body of the connection bracket 34 so that the two solar-battery-built-in plate-like bodies 1 and 27 are integrated with each other. Also in this case, the wiring 8 led from the electric connection portion 5 of the solar-battery-built-in plate-like body 1 is connected to the electric connection portion 30 of the solar-battery-built-in plate-like body 27 through the through hole 33 of the concrete sound insulation wall 23 so that the solar-battery-built-in plate-like bodies 1 and 27 are electrically coupled with each other.

According to the present invention, a solar battery structure having a high conversion efficiency can be used integrally with a sound insulation wall at a place having suitable solar battery installing conditions, such as the edge portion of a superhighway or the like, without particularly providing a new installation place. Accordingly, as a solar-battery-built-in structure for a sound insulation wall, the manufacturing cost and the installation cost can be reduced greatly. As for the way of installation, the respective solar batteries are integrated for a sound insulation wall, electric devices and/or circuits are internally provided, and the solar batteries are easily and removably connected through electric connection portions, so that the installation in the site can be performed in a short time and easily. In addition, as for the management after the installation, the structure can be managed together with the sound insulation wall, so that examination can be performed easily and labor for maintenance can be reduced. In addition, before the installation, the structure is shaped and prepared in advance in a factory in the form which is suitable for transportation as a solar-battery-built-in plate-like structure for a sound insulation wall, so that it can be removed and replaced easily when there arises a fault or damage. Further, in cleaning, the whole of the sound insulation wall including the portion of the solar batteries can be cleaned integrally and efficiently on the basis of the way of cleaning the sound insulation wall.

In the case where the equipment in which solar-battery-built-in sound insulation wall structures are coupled with each other to be extended, is used as a multi-purpose electric power supply system, electricity can be supplied easily through a wiring from any place of the extended structures, so that the equipment can be used not only for an electric equipment of a superhighway or the like but also for supplying electric power to the area around the superhighway. In addition, this solar-battery-built-in sound insulation wall structure equipment can also be applied to a sound insulation wall in a high-speed railroad, a factory or the like where large noise is generated.

## Claims

1. A plate-like body structure with a solar battery for a sound insulation wall, comprising:
a first type plate-like body including a plate-like material having a gentle convex arcuate portion, and a flexible amorphous silicon solar battery disposed on said plate-like material, said first type plate-like body being mounted on a top end portion of a sound insulation wall; and
at least one electric connection portion provided in a circumferential edge portion of said first type plate-like body so as not to project over said circumferential edge.

2. A plate-like body structure with a solar battery for a sound insulation wall according to claim 1, wherein a plurality of said first type plate-like bodies are mounted on the top end portion of the sound insulation wall side by side, said first type plate-like bodies being electrically connected with each other through said each electric connection portion.

3. A plate-like body structure with a solar battery for a sound insulation wall according to claim 1, further comprising a booster circuit which is provided in a space surrounded by said first type plate-like body and is connected to said electric connection portion.

4. A plate-like body structure with a solar battery for a sound insulation wall according to claim 1, further comprising a secondary battery which is provided in a space surrounded by said first type plate-like body and is connected to said electric connection portion.

5. A plate-like body structure with a solar battery for a sound insulation wall, comprising:
a second type plate-like body including two amorphous silicon solar batteries bonded integrally with each other with their not-light-receiving sides made to face each other, and a pair of transparent plate-like materials disposed at front and rear sides of said integrally bonded amorphous silicon solar batteries so as to hold said solar batteries therebetween, said second type plate-like body being inserted into a wall holding frame portion of the sound insulation wall; and
at least one electric connection portion provided in a circumferential edge portion of said second type plate-like body so as not to project over said circumferential edge.

6. A plate-like body structure with a solar battery for a sound insulation wall according to claim 5, wherein a plurality of said second type plate-like bodies are provided side by side, said second type plate-like bodies being electrically connected to each other through said each electric connection portion and a through-hole provided in said wall holding frame portion.

7. A plate-like body structure with a solar battery for a sound insulation wall, comprising:
a second type plate-like body including two amorphous silicon solar batteries bonded integrally with each other with their not-light-receiving sides made to face each other, and a pair of transparent plate-like materials disposed at front and rear sides of said integrally bonded amorphous silicon solar batteries so as to hold said solar batteries therebetween, said second type plate-like body being inserted into a window-like opening portion formed in the sound insulation wall; and
at least one electric connection portion in a circumferential edge portion of said second type plate-like body so as not to project over said circumferential edge.

8. A plate-like body structure with a solar battery for a sound insulation wall according to claim 7, wherein a plurality of said second type plate-like bodies are provided side by side, said second type plate-like bodies being electrically connected to each other through said each electric connection portion and a through-hole provided in the sound insulation wall.

9. A plate-like body structure with a solar battery for a sound insulation wall according to claim 1, further comprising a second type plate-like body and at least one electric connection portion provided in a circumferential edge portion of said second type plate-like body so as not to project over said circumferential edge,
wherein said second type plate-like body includes two amprphous silicon solar batteries bonded integrally with each other with their not-light-receiving sides made to face each other, and a pair of transparent plate-like materials disposed at front and rear sides of said integrally bonded amprphous silicon solar batteries so as to hold said solar batteries therebetween, said second type plate-like body being inserted into a wall holding frame portion of the sound insulation wall and disposed under said first type plate-like body, and
wherein said first type plate-like body and said second type plate-like body are electrically connected to each other through said electric connection portions.

10. A plate-like body structure with a solar battery for a sound insulation wall according to claim 1, further comprising a second type plate-like body and at least one electric connection portion in a circumferential edge portion of said second type plate-like body so as not to project over said circumferential edge,
wherein said second type plate-like body includes two amorphous silicon solar batteries bonded integrally with each other with their not-light-receiving sides made to face each other, and a pair of transparent plate-like materials disposed at front and rear sides of said integrally bonded amorphous silicon solar batteries so as to hold said solar batteries therebetween, said second type plate-like body being inserted into a window-like opening portion formed in the sound insulation wall and disposed under said first type plate-like body, and
wherein said first type plate-like body and said second type plate-like body are electrically connected to each other through said electric connection portions and through a through hole provided in the sound insulation wall.
